(19) **Europäisches Patentamt**

**European Patent Office**

**Office européen des brevets**

(11) **EP 0 986 189 B1**

(12) **FASCICULE DE BREVET EUROPEEN**

(45) Date de publication et mention
de la délivrance du brevet:
**08.03.2006 Bulletin 2006/10**

(51) Int Cl.:
***H04B 1/707*** *(2006.01)*

(21) Numéro de dépôt: **99402221.8**

(22) Date de dépôt: **09.09.1999**

(54) **Procédé de réception de signaux amrc à suppression parallèle d'interférences, étage et récepteur correspondants**

CDMA-Empfangsverfahren mit paralleler Interferenzunterdrückung, entsprechende Stufe und Empfänger

CDMA signals reception method with parallel interference suppression, and its corresponding stage and receiver

(84) Etats contractants désignés:
**DE GB IT**

(30) Priorité: **11.09.1998 FR 9811335**

(43) Date de publication de la demande:
**15.03.2000 Bulletin 2000/11**

(73) Titulaire: **COMMISSARIAT A L'ENERGIE ATOMIQUE**
**75752 Paris Cédex 15 (FR)**

(72) Inventeurs:
• **Boulanger, Christophe**
**94200 Ivry Sur Seine (FR)**

• **Ouvry, Laurent**
**38000 Grenoble (FR)**
• **Piaget, Bernard**
**38610 Venon (FR)**
• **Fort, Charles**
**38470 Vatilieu (FR)**

(74) Mandataire: **Audier, Philippe André et al Brevalex,**
**3, rue du Docteur Lancereaux**
**75008 Paris (FR)**

(56) Documents cités:
**EP-A- 0 654 913**       **EP-A- 0 756 387**
**EP-A- 0 852 432**       **DE-C- 19 623 665**
**DE-C- 19 630 391**       **US-A- 5 361 276**

## Description

### Domaine technique

La présente invention a pour objet un procédé de réception de signaux AMRC à suppression parallèle d'interférences, un étage et un récepteur correspondants.

Elle trouve une application notamment en radiocommunications avec des mobiles.

### Etat de la technique antérieure

La technique d'étalement de spectre par séquence directe consiste, schématiquement, à multiplier un symbole d'information (par exemple un élément binaire) par une séquence pseudo-aléatoire (appelée aussi code) composée d'une séquence d'éléments appelés "chips". Cette opération a pour effet d'étaler le spectre du signal. En réception, le signal reçu est traité par corrélation (ou filtrage adapté) avec une séquence pseudo-aléatoire identique à celle de l'émission, ce qui a pour effet de réduire (ou désétaler) le spectre. Le signal ainsi désétalé est traité pour retrouver le symbole d'information.

Cette technique permet à plusieurs utilisateurs d'accéder à un même système de radiocommunications, à condition toutefois qu'ils utilisent des codes distincts. On parle alors d'accès multiple à répartition par les codes, ou AMRC en abrégé (CDMA en anglais pour "Code Division Multiple Access").

Bien qu'offrant de nombreux avantages, les communications par étalement de spectre à accès multiple par répartition par les codes sont de capacité limitée en terme de nombre d'utilisateurs. Cette limitation est due à des interférences se produisant entre signaux provenant d'utilisateurs différents. Plus les utilisateurs sont nombreux, plus ce phénomène perturbateur prend de l'importance.

Diverses solutions ont été proposées pour remédier à cet inconvénient et, notamment, la suppression (ou tout au moins la réduction) des interférences. Ainsi, dans le brevet américain US-A-5,218,619, par exemple, on préconise une suppression séquentielle des interférences en procédant par ordre décroissant de puissance des signaux des divers utilisateurs. Dans le brevet américain US-A-5,363,403 et US-A-5,644,592, on preconise au contraire une suppression parallèle de ces interférences. Comme la présente invention relève de cette dernière technique, on peut s'y arrêter en illustrant la structure générale d'un récepteur de ce type.

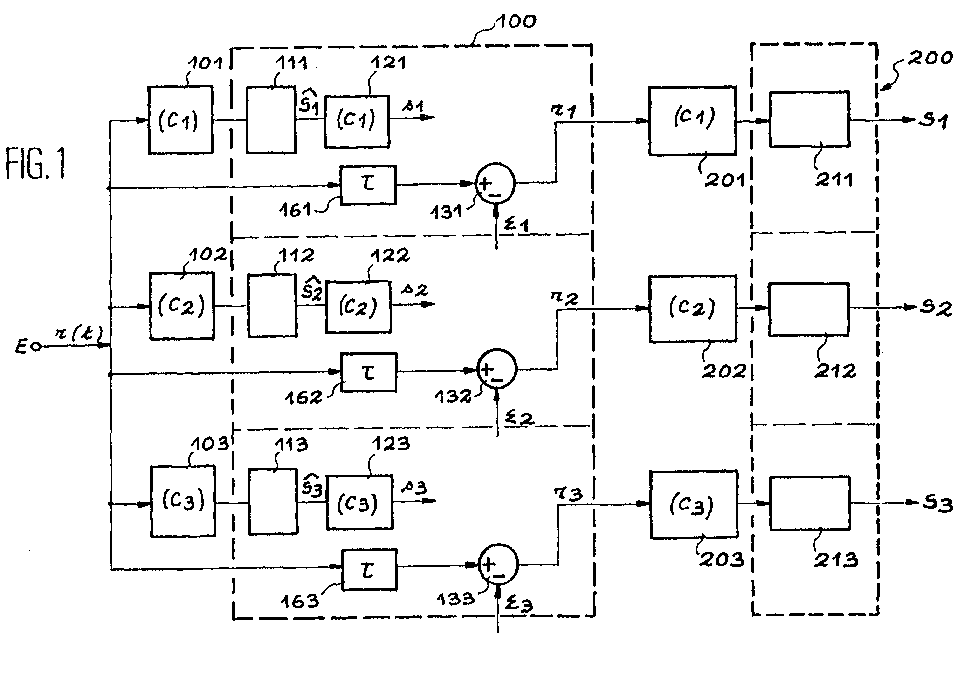

Le récepteur illustré sur la figure 1 annexée comprend une entrée générale E recevant un signal composite r (t) formé d'une pluralité de signaux correspondant à différents symboles d'information $S_1$, $S_2$, $S_3$. qui ont été étalés par une pluralité de codes pseudo-aléatoires $C_1$, $C_2$, $C_3$. Le récepteur représenté est supposé travailler avec trois codes, mais dans la pratique, évidemment, ce nombre est plus élevé.

Le récepteur représenté comprend d'abord un étage d'entrée avec des moyens 101, 102, 103 aptes à recevoir le signal composite et à délivrer un signal désétalé par le code $C_1$, $C_2$ ou $C_3$ propre à chaque voie ; ces moyens peuvent être constitués par un corrélateur ou par un filtre adapté.

Le récepteur comprend ensuite un étage 100 de suppression parallèle d'interférences qui comprend :

- des moyens 111, 112, 113 recevant le signal désétalé et délivrant une estimation $\hat{S}_1$, $\hat{S}_2$ ou $\hat{S}_3$ du symbole d'information correspondant ; ces moyens peuvent comprendre un intégrateur et un circuit de décision ;
- des moyens 121, 122, 123 aptes à ré-étaler le symbole estimé $\hat{S}_1$, $\hat{S}_2$ ou $\hat{S}_3$ à l' aide du code $C_1$, $C_2$, $C_3$ propre à la voie, pour délivrer des signaux ré-étalés $s_1$, $s_2$ ou $s_3$,
- des moyens 131, 132, 133 pour soustraire du signal appliqué à l'entrée de la voie (après un retard convenable produit par un circuit à retard 161, 162, 163), la somme $\Sigma_1$, $\Sigma_2$, $\Sigma_3$ des signaux ré-étalés issus des autres voies ; en d'autres termes, le signal $\Sigma_1$ est formé par la somme $s_2+s_3$, le signal $\Sigma_2$ par $s_1+s_3$ et le signal $\Sigma_3$ par $s_1+s_2$. Les moyens 131, 132, 133 délivrent, dans chaque voie, un nouveau signal $r_1$, $r_2$, $r_3$ qui est débarrassé, en partie au moins, des interférences d'accès multiple correspondant aux autres voies.

Après l'étage de suppression parallèle d'interférences, on trouve trois filtres adaptés 201, 202, 203 travaillant respectivement avec les codes $C_1$, $C_2$, $C_3$ et désétalant les signaux $r_1$, $r_2$, $r_3$, puis un étage de sortie 200 avec trois circuits de décision 211, 212, 213 délivrant les trois données $S_1$, $S_2$, $S_3$.

Bien que donnant satisfaction à certains égards, de tels récepteurs n'éliminent pas les risques d'erreur. La suppression des interférences peut même, si elle est conduite sans précautions, augmenter ce risque. La présente invention a justement pour but de le réduire (autrement dit de diminuer le taux d'erreur de bits) en améliorant les moyens de reconstruction des signaux avant la suppression proprement dite des interférences. Avec l'invention, un seul étage de suppression parallèle d'interférences présente de meilleures performances que deux étages de suppression classiques.

Pour obtenir ce résultat, l'invention prévoit d'utiliser, dans l'étage de suppression d'interférences et pour estimer les données reçues, un critère particulier qui est le critère dit de maximum de vraisemblance (en anglais "Maximum Likelihood"). Ce critère est en soi connu dans la technique AMRC. On pourra en trouver une description, par exemple, dans l'ouvrage de J.G. PROAKIS, intitulé "Digital Communications" McGRAW-HILL, Inc., 3ème édition,, 1995, Chapitre 5-1-4. Mais, dans l'art antérieur, ce critère est utilisé dans un récepteur ordinaire, et non dans un moyen de suppression parallèle d'interférences d'accès multiple. Par ailleurs, dans l'art antérieur, ce critère est mis en oeuvre à l'aide d'un algorithme dit de Viterbi, qui permet, à travers un treillis représentant toutes les configurations possibles, de trouver une séquence de données qui minimise une quantité dite "métrique de distance euclidienne". Cette technique, qui prend en compte l'ensemble de toutes les données transmises par tous les utilisateurs, est souvent très complexe. La présente invention adapte cette technique, notamment en la simplifiant. Elle définit, par ailleurs, une métrique particulière adaptée à la suppression parallèle des interférences d'accès multiple.

**Exposé de l'invention**

De façon précise, la présente invention est décrite dans les revendications indépendantes 1, 2, 4.

Les revendications dépendantes décrivent les exemples de réalisation avantageux de l'invention.

**Brève description des dessins**

- la figure 1, déjà décrite, montre un récepteur classique à suppression parallèle d'interférences d'accès multiple ;
- la figure 2 montre un étage à suppression parallèle d'interférences avec, selon l'invention, des moyens fondés sur un critère de maximum de vraisemblance ;
- la figure 3 montre un récepteur conforme à l'invention avec trois étages de suppression d'interférences conformes à l'invention ;
- la figure 4 montre des exemples d'évolution de métriques en fonction des hypothèses sur les signes ;
- la figure 5 illustre une variante où la fiabilité de l'estimation est testée et où seules les données peu fiables sont prises en compte dans le calcul des métriques ;
- la figure 6 illustre une autre variante où les sorties des filtres adaptés sont reliées à l'étage de sortie par des moyens de pondération ;
- la figure 7 illustre encore une autre variante où les sorties des filtres adaptés sont pondérées selon des seuils de fiabilité ;
- la figure 8 montre une réponse impulsionnelle ayant servi à l'estimation des performances d'un récepteur conforme à l'invention ;
- la figure 9 montre les variations du taux d'erreur de bits en fonction du rapport signal sur bruit pour une première réponse impulsionnelle de canal impliquant un seul trajet ;
- la figure 10 montre les variations du taux d'erreur de bits en fonction du rapport signal sur bruit pour la réponse impulsionnelle de la figure 8.

**Description de modes particuliers de réalisation**

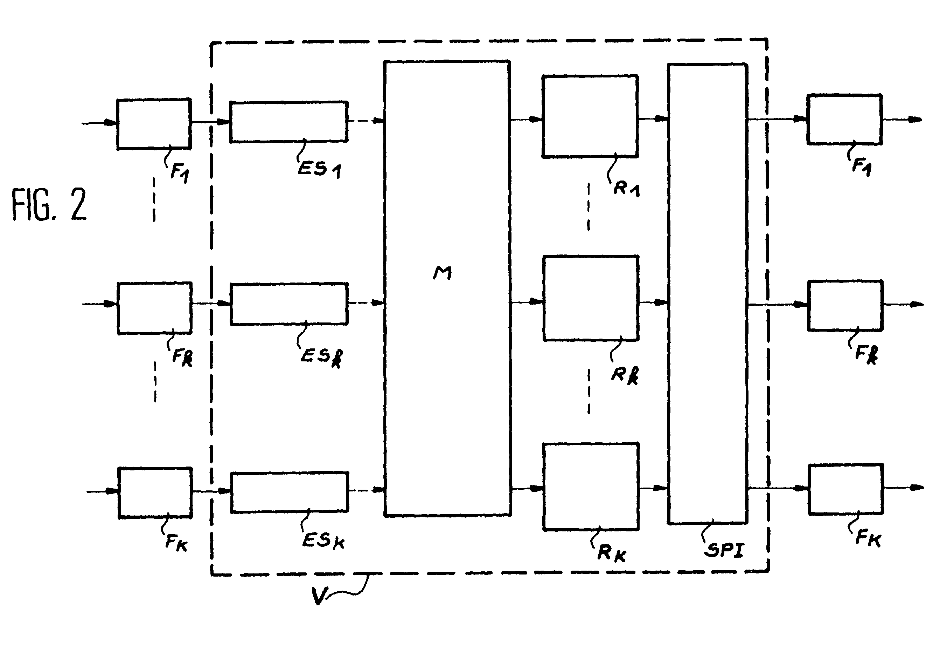

La figure 2 représente un étage de suppression parallèle d'interférences conforme à l'invention. Cet étage porte la référence générale V. Il est précédé de K filtres adaptés (ou corrélateurs) $F_1$, ..., $F_k$, ..., $F_K$. Le nombre K désigne le nombre de voies, donc le nombre maximum d'utilisateurs, l'indice k étant un indice courant compris entre 1 et K.

Le circuit V comprend K moyens $ES_1$, ... , $ES_k$, ... , $ES_k$ d'estimation du signal transmis lesquels estiment l'amplitude et le retard de chaque pic délivré par le filtre adapté qui précède. Le circuit comprend ensuite des moyens M pour calculer des métriques (dont on donnera l'expression précise plus loin), pour déterminer la métrique la plus faible et pour délivrer la configuration de signal correspondante, qui est alors la plus vraisemblable. Le circuit comprend encore K moyens $R_1$, ..., $R_k$, ..., $R_K$ pour reconstruire les signaux, c'est-à-dire pour délivrer des signaux étalés en fréquence par les codes pseudo-aléatoires. Ces signaux reconstruits sont alors appliqués à un circuit SPI de suppression parallèle d'interférences, dont la structure n'est pas représentée mais qui comprend, comme représenté sur la figure 1, des soustracteurs, des lignes à retard, etc...

L'étage V est suivi de filtres adaptés $F_1$, ..., $F_k$, ... , $F_K$ qui permettent soit d'attaquer un nouvel étage de suppression parallèle d'interférences, soit un étage de sortie.

Pour illustrer le fonctionnement du moyen M de calcul des métriques, on va considérer le cas simple d'un étage à deux voies (donc à deux utilisateurs) . On suppose également qu'il existe plusieurs étages de suppression parallèle d'interférences, chacun étant repéré par un indice i, ces étages suivant un étage d'entrée auquel est attribué l'indice o. Dans l'étage d'indice i, les deux moyens d'estimation de l'amplitude du signal transmis délivrent donc deux signaux notés $Z_i(1)$ pour la première voie et $Z_i(2)$ pour la seconde, alors que les deux filtres adaptés de l'étage d'entrée délivrent des signaux $Z_o(1)$ et $Z_o(2)$.

Le circuit M considère la valeur absolue des amplitudes de ces signaux, soit $|Z_i(1)|$ et $|Z_i(2)|$ et formule deux hypothèses sur le signe que l'on peut affecter à ces grandeurs, à savoir + ou -. Il y a donc $2^2=4$ hypothèses pour les groupes de deux signaux pris avec leur signe, ces quatre hypothèses (notées (Hyp)j) étant repérées par un indice j allant de 1 à 4. Les quatre configurations correspondant à ces quatre hypothèses sont les suivantes :

$$(\text{Hyp})_1 = \begin{vmatrix} + Z_i(1) \\ + Z_i(2) \end{vmatrix} \qquad (\text{Hyp})_2 = \begin{vmatrix} + Z_i(1) \\ - Z_i(2) \end{vmatrix}$$

$$(\text{Hyp})_3 = \begin{vmatrix} - Z_i(1) \\ + Z_i(2) \end{vmatrix} \qquad (\text{Hyp})_4 = \begin{vmatrix} - Z_i(1) \\ - Z_i(2) \end{vmatrix}$$

Selon une notation classique, chaque groupe de deux signaux peut être considéré comme les deux composantes d'un vecteur noté $\left(\vec{Z_i}\right)$. On est donc en présence de quatre vecteurs possibles selon l'hypothèse retenue, soit :

$$\left(\vec{Z_i}\right)_1, \quad \left(\vec{Z_i}\right)_2, \quad \left(\vec{Z_i}\right)_3, \quad \left(\vec{Z_i}\right)_4$$

L'invention met en oeuvre une métrique de distance euclidienne, ci-après dénommée "métrique", de la forme $\sum(\vec{X} - \vec{Y})^2$ où $\vec{X}$ et $\vec{Y}$ représentent deux vecteurs. Une telle métrique mesure, en quelque sorte, la distance entre les deux points extrémités des vecteurs. Plus la métrique est faible, plus les vecteurs sont proches.

On va donc calculer les quatre métriques suivantes, correspondant aux quatre hypothèses formulées :

$$M_1 = (Z_o(1) - |Z_i(1)|)^2 + (Z_o(2) - |Z_i(2)|)^2$$

$$M_2 = (Z_o(1) - |Z_i(1)|)^2 + (Z_o(2) + |Z_i(2)|)^2$$

$$M_3 = (Z_o(1) + |Z_i(1)|)^2 + (Z_o(2) - |Z_i(2)|)^2$$

$$M_4 = (Z_o(1) + |Z_i(1)|)^2 + (Z_o(2) + |Z_i(2)|)^2$$

La plus faible de ces métriques correspond à la configuration la plus proche de la configuration en sortie de l'étage d'entrée, donc à la configuration la plus vraisemblable. Si, par exemple, la plus faible métrique est la troisième, $M_3$, la configuration la plus vraisemblable sera :

$$\vec{Z_i} = \begin{array}{c} - |Z_i(1)| \\ + |Z_i(2)| \end{array}$$

Le moyen M délivrera alors les signaux $-|Z_i(1)|$ et $+|Z_i(2)|$ et les deux circuits de reconstitution qui suivent étaleront ces signaux à l'aide des deux séquences pseudo-aléatoires appropriées. Les moyens classiques de suppression parallèle d'interférences recevront donc les signaux étalés les plus vraisemblables et pourront alors corriger ces signaux de manière optimale.

D'une manière générale, les moyens M d'un étage de rang i calcule la quantité

$$\sum_{bloc} \left( \vec{Z_o} - (\vec{Z_i})_j \right)^2$$

où la sommation est étendue au moins aux valeurs constituant le bloc de données dans un intervalle de temps égal à N durées de symbole.

Avec N=1, on n'a que K composantes à traiter (cas dit "bloc monosymbole") et le nombre d'hypothèses à formuler est de $2^K$. Avec NK composantes, ce nombre monte à $2^{NK}$. Pour éviter une trop grande complexité, on limite N à quelques unités, par exemple à moins de 5.

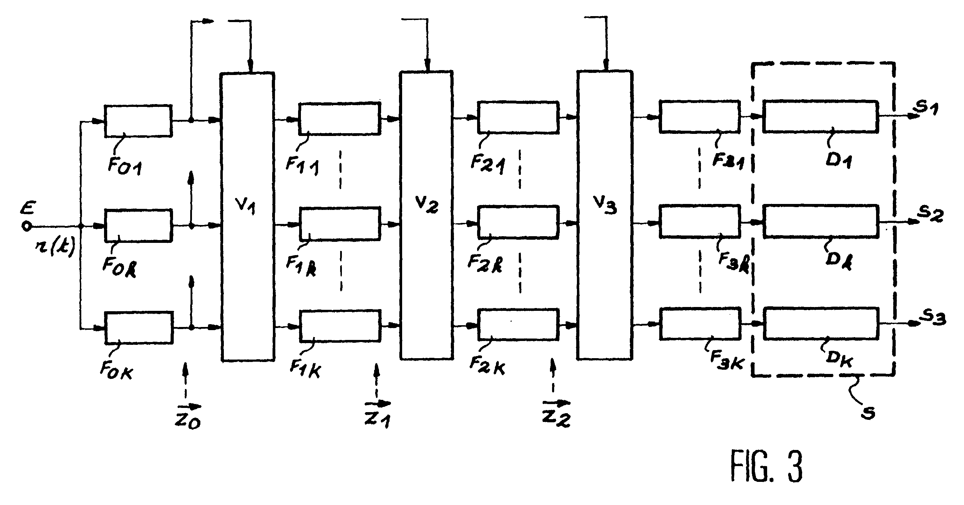

La figure 3 illustre un récepteur complet comprenant un étage d'entrée et un étage de sortie, comme pour la figure 1, avec trois étages de suppression parallèle d'interférences référencés $V_1$, $V_2$, $V_3$ conformes à ce qui vient d'être décrit. Le récepteur comprend encore les filtres adaptés associés, $F_{11}$, ..., $F_{1k}$, ..., $F_{1K}$ pour le premier, $F_{21}$, ..., $F_{2k}$, ..., $F_{2K}$ pour le deuxième et $F_{31}$, ..., $F_{3k}$, ..., $F_{3K}$ pour le troisième.

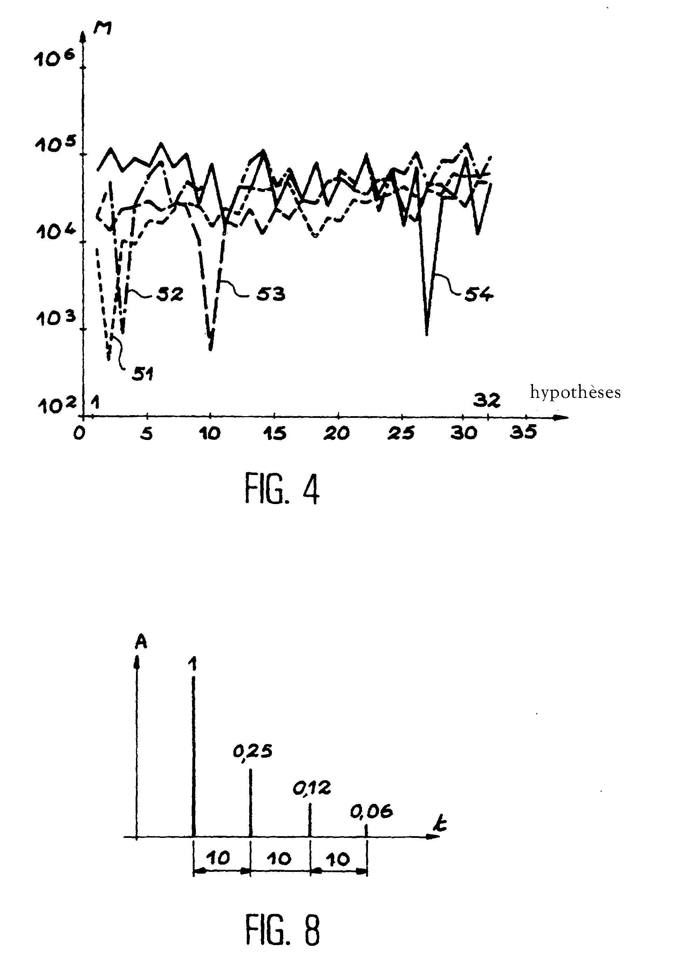

Pour illustrer les variations des valeurs prises par la métrique en fonction des hypothèses faites sur les signes, on considère le cas de trois utilisateurs utilisant chacun des séquences pseudo-aléatoires de 63 éléments ou "chips" chacune, la modulation employée étant de type différentiel à modulation quaternaire de phase (DQPSK) avec deux voies par utilisateur, à savoir une voie en phase (dite I) et une voie en quadrature de phase (dite Q). Il y a donc 6 voies en parallèle, soit $2^6=32$ hypothèses possibles sur les signes d'un bloc monosymbole. Ces 32 hypothèses ou configurations sont repérées par leur rang sur le diagramme de la figure 4, rang porté en abscisses, et les valeurs prises par la métrique sont portées en ordonnées. Quatre cas différents sont représentés correspondant aux quatre courbes 51, 52, 53 et 54. La valeur de la métrique est exprimée en éléments ou "chips". L'échelle est logarithmique. On voit bien que la métrique passe, pour une certaine configuration, par un minimum. Cette configuration est la plus vraisemblable. On constate également que les minima sont bien marqués, donc facilement exploitables.

Le procédé et le récepteur qui viennent d'être décrits supposent, en toute généralité, que $2^{NK}$ hypothèses sont formulées. On peut naturellement réduire la complexité du procédé en réduisant le bloc de signaux à K données (bloc monosymbole évoqué plus haut). Mais on peut réduire encore cette complexité en ne prenant en compte, dans le processus de recherche du maximum de vraisemblance, que les signaux pour lesquels l'estimation est jugée peu fiable, autrement dit, en excluant de ce processus les signaux jugés fiables. En supposant que Q signaux sont fiables, on ne retiendra donc que K-Q signaux pour le calcul des métriques, ce qui correspond à $2^{K-Q}$ hypothèses.

Des moyens de mesure de la fiabilité sont décrits et revendiqués dans la demande de brevet français n°98 09782 déposée le 30 juillet 1998 par le présent Demandeur.

Mais d'autre critères de fiabilité peuvent être utilisés, comme ceux qui sont décrits dans le brevet US-A-5, 644, 592.

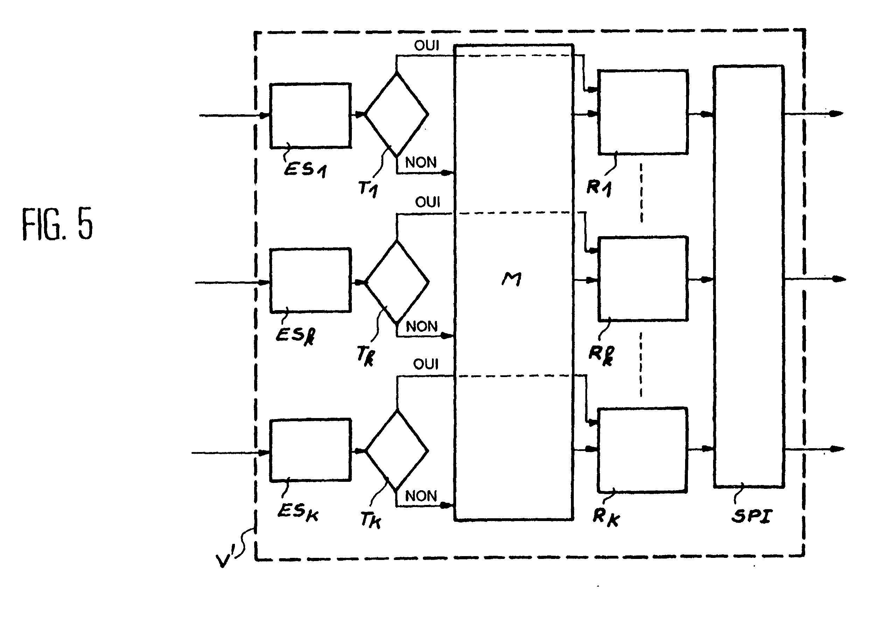

La figure 5 illustre un mode de réalisation d'un étage simplifié dans ce sens. Par rapport à l'étage de la figure 2, l'étage V' comprend des moyens de test de fiabilité $T_1$, ..., $T_k$, ..., $T_K$ qui reçoivent les signaux provenant des circuits d'estimation $ES_1$, ..., $ES_k$, ... , $ES_K$ et qui adressent ce signal soit au circuit M pour le calcul des métriques (branche marquée NON) soit aux circuits de reconstruction $R_1$, ..., $R_k$, ..., $R_K$ (branche marquée OUI).

Naturellement, plusieurs de ces étages simplifiés peuvent être mis en cascade, comme pour la figure 3.

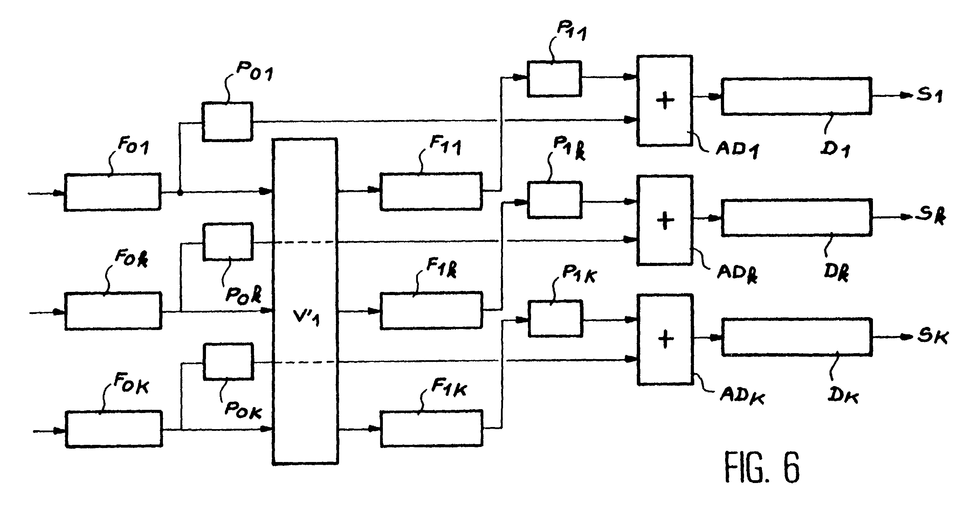

Dans un autre mode particulier de réalisation, les signaux délivrés par les filtres adaptés peuvent être combinés linéairement avant d'être adressés à l'étage de sortie. On voit ainsi, sur la figure 6, des premiers moyens de pondération $P_{o1}$, ..., $P_{ok}$, ..., $P_{oK}$ disposés en sortie des filtres adaptés $F_{o1}$, ..., $F_{ok}$, ..., $F_{oK}$ de l'étage d'entrée, des circuits de pondération $P_{11}$, ..., $P_{1k}$, ..., $P_{1K}$ disposés en sortie des filtres adaptés placés derrière l'étage $V'_1$ de suppression parallèle d'interférences et des additionneurs $AD_1$, ..., $AD_k$, ..., $AD_K$ dont les entrées sont reliées aux circuits de pondération et la sortie aux circuits de décision $D_1$, ..., $D_k$, ..., $D_K$.

Les coefficients de pondération peuvent être fixes ou variables. Une telle technique est décrite, par exemple, dans US-A-5,553,062.

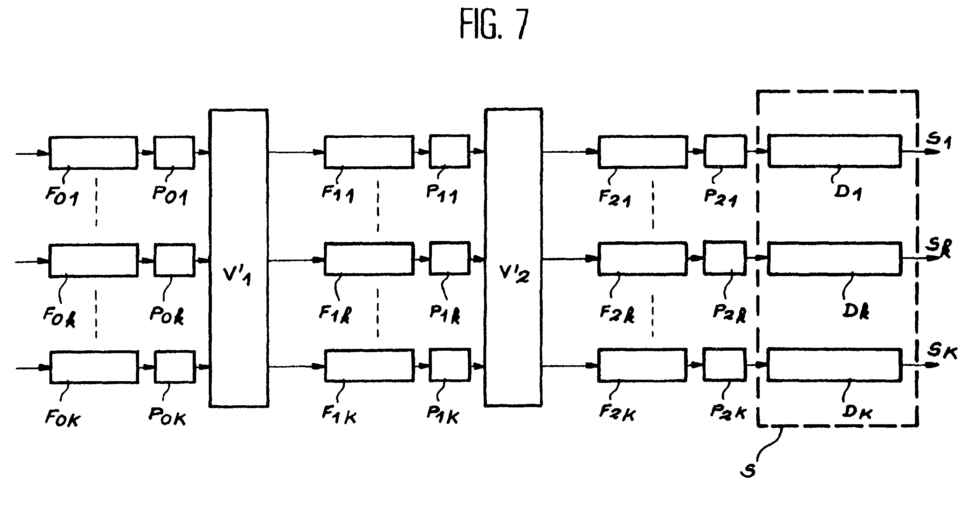

On peut aussi améliorer les reconstructions et les estimations des signaux en utilisant des seuils de fiabilité pour reconstruire ou ne pas reconstruire (ou ne reconstruire que partiellement) certains signaux. Une telle technique est décrite et revendiquée dans la demande de brevet français n°98 03586 déposée le 24 mars 1998 par le présent Demandeur. Une technique de ce genre est décrite également dans le brevet US-A-5,644,592. La figure 7 illustre ce mode particulier de réalisation dans le cas de deux étages de suppression parallèle d'interférences $V'_1$ et $V'_2$ simplifiés

(c'est-à-dire conforme à la figure 5). On y voit des premiers circuits de pondération $P_{o1}$, ..., $P_{ok}$, ..., $P_{oK}$, des deuxièmes circuits de pondération $P_{11}$, ..., $P_{1k}$, ..., $P_{1K}$ et enfin des troisièmes circuits de pondération $P_{21}$, ..., $P_{2k}$, ..., $P_{2K}$.

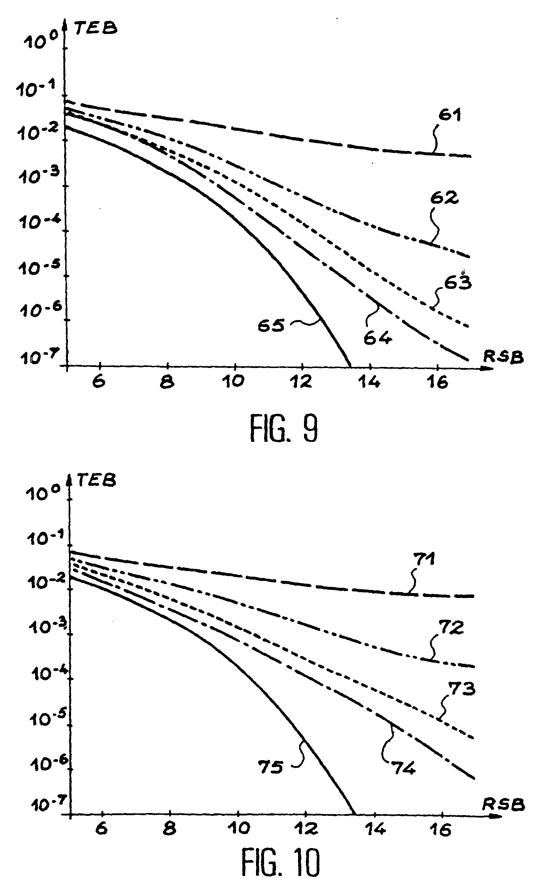

Les performances d'un récepteur selon l'invention ont été simulées par le Demandeur. Pour cela, certaines hypothèses ont été formulées quant à la réponse impulsionnelle du canal de propagation. On peut considérer d'abord une réponse impulsionnelle idéale qui serait formée par un unique pic, ce qui correspondrait à une absence de trajets multiples. Mais on peut choisir aussi une hypothèse plus réaliste, illustrée sur la figure 8, où l'on voit un premier pic d'amplitude 1 et trois pics d'amplitude égale respectivement à 0,25, 0,12 et à 0,06 représentant trois trajets secondaires. Les résultats de la simulation sont présentés sur les figures 9 et 10 pour ces deux hypothèses. Sur ces figures, le taux d'erreur de bits (TEB) est porté en ordonnées et le rapport signal sur bruit (RSB) en abscisses. Les références suivantes ont été utilisées pour les courbes :

- ♦ 61,71 correspondent à une structure classique;
- ♦ 62,72 correspondent à une suppression parallèle d'interférences à un étage ;
- ♦ 63,73 correspondent à une suppression parallèle d'interférences à deux étages ;
- ♦ 64,74 correspondent à une suppression parallèle d'interférences selon l'invention (version simplifiée dans le cas de K=5 utilisateurs) ;
- ♦ 65,75 correspondent à une suppression parallèle d'interférences théorique pour un seul utilisateur en modulation DQPSK avec canal gaussien.

On voit que l'invention conduit à une amélioration sensible des performances. En particulier, un seul étage de suppression parallèle d'interférences (en version simplifiée) présente de meilleures performances que deux étages classiques.

## Revendications

**1.** Procédé de réception de signaux AMRC avec suppression parallèle d'interférences dans lequel :

- on reçoit un signal composite (r(t)) comprenant une pluralité de K signaux correspondant à des symboles d'information qui ont été étalés en fréquence par K séquences pseudo-aléatoires différentes,
- on désétale ces K signaux, à l'aide desdites K séquences, dans un étage d'entrée constitué de K filtres adaptés ($F_1$, ..., $F_k$, ..., $F_K$), pour obtenir K premiers signaux désétalés,
- on estime les K symboles correspondants,
- on élimine des interférences multi-utilisateurs de K signaux dans une pluralité d'étages de suppression parallèle d'interférences, dans chacun desdits étages.
- on reconstruit K signaux étalés en fréquence en réétalant lesdits symboles estimés par les séquences pseudo-aléatoires correspondantes,
- on soustrait d'un signal étalé reconstruit les contributions des (K-1) autres signaux étalés reconstruits pour obtenir K nouveaux signaux étalés en fréquence mais débarrassés, au moins en partie, des interférences,
- après chaque étage de suppression parallèle d'interférences on désétale les K nouveaux signaux dans un étage de filtrage intercalé entre les étages de suppression parallèle d'interférences,

ce procédé étant **caractérisé en ce que** :

- dans chaque étage de suppression parallèle d'interférences on formule toutes les hypothèses possibles sur les signes de NxK symboles désétalés à l'étage de filtrage suivant, où N est un entier égal à 1 ou à quelques unités et qui représente un nombre de symboles consécutifs sur lequel s'effectue le traitement,
- on calcule, pour chaque hypothèse, la métrique de distance entre l'ensemble des symboles désétalés à l'étage de filtrage suivant et les NxK premiers symboles désétalés délivrés par l'étage d'entrée,
- on retient l'hypothèse pour laquelle la métrique est la plus faible, hypothèse qui présente alors un maximum de vraisemblance,
- on reconstruit seulement les NxK symboles correspondant à cette hypothèse la plus vraisemblable.

**2.** Étage de suppression parallèle d'interférences mettant en oeuvre le procédé selon la revendication 1, cet étage comprenant :

- K entrées recevant les K signaux désétalés en fréquence,
- K moyens d'estimation ($ES_1$, ... , $ES_k$, ..., $ES_K$) de symboles correspondant à ces K signaux,

- K moyens de reconstruction ($R_1$, ..., $R_k$, ..., $R_K$) de signaux réétalés en fréquence à l'aide de séquences pseudo-aléatoires correspondantes,
- des moyens de suppression parallèle d'interférences (SPI) comprenant K voies en parallèle aptes à soustraire d'un signal réétalé les contributions des (K-1) autres signaux réétalés,
- K sorties délivrant K signaux étalés en fréquence débarrassés, au moins en partie, des interférences,

cet étage étant **caractérisé en ce qu'**il comprend :

- des moyens (M) placés entre les moyens d'estimation ($ES_1$, ... , $ES_k$, ... , $ES_K$) et les moyens de reconstruction ($R_1$, ..., $R_k$, ... , $R_K$), et aptes à formuler toutes les hypothèses possibles, sur les signes des N x K symboles désétalés à l'étage de filtrage suivant, et à calculer, pour chaque hypothèse, la métrique de distance $M_j$ entre l'ensemble des N x K symboles désétalés à l'étage de filtrage suivant et des N x K symboles désétalés à l'étage d'entrée, et à retenir l'hypothèse j pour laquelle la métrique $M_j$ est la plus faible, hypothèse qui présente alors un maximum de vraisemblance.

3. Étage selon la revendication 2, dans lequel les moyens de calcul de la métrique comprennent :

- des moyens pour formuler hypothèses sur le signe à affecter à l'amplitude des signaux délivrés par les moyens d'estimation,
- des moyens pour calculer toutes les différences $Z_0(k) - Z_i(k)_j$ où $Z_0(k)$ représente le signal à la sortie du filtre adapté de voie k de l'étage d'entrée et $Z_i(k)_j$ le signal à l'étage de filtrage i de voie k, le signal étant affecté du signe correspondant à chaque hypothèse j,
- des moyens pour calculer le carré de ces différences, soit $(Z_0(k) - Z_i(k)_j)^2$, des moyens pour calculer la somme de ces carrés pour les K voies des signaux, ce qui conduit, pour chaque hypothèse j, à la métrique $M_j$.

4. Récepteur de signaux AMRC mettant en oeuvre le procédé de la revendication 1 et comprenant :

- une entrée générale (E) apte à recevoir un signal composite (r(t)) formé d'une pluralité de K signaux correspondant à des symboles d'information ayant été étalés en fréquence par K séquences pseudo-aléatoires différentes,
- un étage d'entrée avec K voies en parallèle comprenant chacune des filtres ($F_{01}$, ..., $F_{0k}$, ..., $F_{0K}$) pour désétaler en fréquence le signal composite (r(t)) par l'une des K séquences pseudo-aléatoires, cet étage délivrant K signaux désétalés en fréquence,
- au moins un étage de suppression parallèle d'interférences ($V_1$, $V_2$, ...),
- des étages de filtrage intercalés entre les étages de suppression parallèle d'interférences et comprenant K filtres ($F_{1k}$, $F_{2k}$, ...) adaptés aux séquences pseudoaléatoires,
- un circuit de sortie (S) comprenant K circuits de décision ($D_1$, ..., $D_k$, ... , $D_K$),

ce récepteur étant **caractérisé en ce qu'**au moins l'un des étages de suppression parallèle d'interférences est un étage selon les revendications 2 ou 3.

5. Récepteur selon la revendication 4, dans lequel au moins un étage de suppression parallèle d'interférences comprend des moyens de test de fiabilité ($T_1$, ..., $T_k$, ..., $T_K$) des signaux estimés et dans lequel les moyens (M) pour formuler les hypothèses sur le signe à affecter à ces signaux sont adaptés à ne prendre en compte que les signaux estimés dont la fiabilité est en dessous d'un seuil fixé, les autres signaux estimés dont la fiabilité est située au-dessus du seuil étant directement utilisés par les moyens de suppression d'interférences (SPI).

6. Récepteur selon la revendication 4, dans lequel l'étage d'entrée avec ses filtres et chaque étage de filtrage adapté comprennent des moyens de pondération ($P_{0k}$) des sorties des filtres ($F_{0k}$), l'étage de sortie (S) comprenant des additionneurs ($AD_k$) dont les entrées sont reliées aux circuits de pondération ($P_{0k}$) et la sortie est reliée aux circuits de décision ($D_k$).

7. Récepteur selon la revendication 4, dans lequel chaque étage de filtrage est suivi d'un circuit de pondération ($P_{0k}$, $P_{1k}$, $P_{2k}$, ...) disposé entre la sortie de l'étage de filtrage et l'entrée de l'étage de suppression d'interférences, la pondération dépendant de la fiabilité de l'estimation opérée dans l'étage.

**Patentansprüche**

1. CDMA-Empfangsverfahren mit paralleler Interferenzunterdrückung, umfassend:

   - den Empfang eines Verbundsignals (r(t)), eine Vielzahl von K Signalen umfassend, die Informationssymbolen entsprechen, die durch K verschiedene Pseudozufallssequenzen frequenzgespreizt worden sind,
   - die Entspreizung dieser K Signale mit Hilfe der genannten K Sequenzen in einer Eingangsstufe, gebildet durch K Anpassungsfilter ($F_1$,..., $F_k$, ..., $F_K$), um K erste entspreizte Signale zu erhalten,
   - die Schätzung der K entsprechenden Symbole,
   - die Eliminierung der Mehrbenutzer-Interferenzen von K Signalen in einer Vielzahl von Parallelinterferenzunterdrückungsstufen in jeder dieser Stufen,
   - die Rekonstruktion von K frequenzgespreizten Signalen, indem man die genannten durch die entsprechenden Pseudozufallssequenzen geschätzten Symbole wieder spreizt,
   - die von einem rekonstruierten gespreizten Signal ausgehende Subtraktion der Beiträge der (K-1) anderen rekonstruierten gespreizten Signale, um K neue frequenzgespreizte aber wenigstens teilweise von den Interferenzen befreite Signale zu erhalten,
   - die Entspreizung der K neuen Signale nach jeder parallelen Interferenzunterdrückungsstufe in einer Filterstufe, geschaltet zwischen den parallelen Interferenzunterdrückungsstufen,

   **dadurch gekennzeichnet, dass**:

   - man in jeder parallelen Interferenzunterdrückungsstufe alle möglichen Hypothesen bezüglich der Vorzeichen von NxK in der folgenden Filterstufe entspreizten Symbolen formuliert, wo N eine ganze Zahl gleich 1 oder einigen Einheiten ist und eine Anzahl konsekutiver Symbole repräsentiert, mit denen die Verarbeitung erfolgt,
   - man für jede Hypothese die Distanz-Metrik zwischen der Gruppe der in der folgenden Filterstufe entspreizten Symbole und den NxK durch die Eingangsstufe gelieferten ersten entspreizten Symbole berechnet,
   - man die Hypothese in Betracht zieht, für welche die Metrik am kleinsten ist, wobei diese Hypothese dann ein Wahrscheinlichkeitsmaximum darstellt,
   - man nur die dieser wahrscheinlichsten Hypothese entsprechenden NxK Symbole rekonstruiert.

2. Parallele Interferenzunterdrückungsstufe zur Anwendung des Verfahrens nach Anspruch 1, wobei diese Stufe umfasst:

   - K Eingänge für den Empfang der K frequenzentspreizten Signale,
   - K Schätzungseinrichtungen ($Es_1$, ..., $ES_k$, ..., $ES_K$) von diesen K Signalen entsprechenden Symbolen,
   - K Rekonstruktionseinrichtungen ($R_1$, ..., $R_k$, ..., $R_K$) von mit Hilfe entsprechender Pseudozufallssequenzen wieder frequenzgespreizten Signalen,
   - Einrichtungen zur parallelen Interferenzunterdrückung (SPI), K parallele Kanäle umfassend, fähig von einem wiedergespreizten Signal die Beiträge der (K-1) anderen wiedergespreizten Signale zu subtrahieren,
   - K Ausgänge, die K frequenzgespreizte, wenigstens teilweise von den Interferenzen befreite Signale liefern,

   wobei diese Stufe **dadurch gekennzeichnet ist, dass** sie umfasst:

   - Einrichtungen (M), geschaltet zwischen den Schätzungseinrichtungen ($Es_1$, ..., $ES_k$, ..., $ES_K$) und den Rekonstruktionseinrichtungen ($R_1$, ..., $R_k$, ..., $R_K$) und fähig, alle möglichen Hypothesen bezüglich der Vorzeichen von NxK in der folgenden Filterstufe entspreizten Symbolen zu formulieren und für jede Hypothese die Distanz-Metrik $M_j$ zwischen der Gruppe der in der nachfolgenden Filterstufe entspreizten Symbole und den NxK in der Eingangsstufe entspreizten Symbole zu berechnen, und die Hypothese j in Betracht zu ziehen, für welche die Metrik $M_j$ am kleinsten ist, wobei diese Hypothese dann ein Wahrscheinlichkeitsmaximum darstellt.

3. Stufe nach Anspruch 2, bei der die Einrichtungen zur Berechnung der Metrik umfassen:

   - Einrichtungen zur Formulierung von Hypothesen bezüglich des der Amplitude der durch die Schätzungseinrichtungen gelieferten Signale zuzuteilenden Vorzeichens,
   - Einrichtungen zur Berechnung aller Differenzen $Z_0(k) - Z_i(k)_j$, wo $Z_0(k)$ das Signal am Ausgang des Anpassungsfilters des Kanals k der Eingangsstufe darstellt und $Z_i(k)_j$ das Signal an der Filterstufe des Kanals k, wobei dem Signal das jeder Hypothese j entsprechende Vorzeichen zugeteilt wird,
   - Einrichtungen zur Berechnung des Quadrats dieser Differenzen, also $(Z_0(k) - Z_i(k)_j)^2$ und Einrichtungen zur

Berechnung der Summe dieser Quadrate für die K Kanäle der Signale, was für jede Hypothese j zu der Metrik $M_j$ führt.

4. CDMA-Signalempfänger zur Anwendung des Verfahrens nach Anspruch 1, umfassend:

- einen allgemeinen Eingang (E) für den Empfang eines Verbundsignals (r(t)), eine Vielzahl von K Signalen umfassend, die Informationssymbolen entsprechen, die durch K verschiedene Pseudozufallssequenzen frequenzgespreizt worden sind,
- eine Eingangsstufe mit K parallelen Kanälen mit Filtern ($F_{01}$, ..., $F_{0k}$, ..., $F_{0K}$) zur Frequenzentspreizung des Verbundsignals (r(t)) durch eine der K Zufallssequenzen, wobei diese Stufe K frequenzentspreizte Signale liefert,
- wenigstens eine Parallelinterferenzunterdrückungsstufe ($V_1$, $V_2$, ...),
- Filterstufen, geschaltet zwischen den Parallelinterferenzunterdrückungsstufen, K an die Pseudozufallssequenzen angepasste Filter ($F_{1k}$, $F_{2k}$, ...) umfassend,
- eine Ausgangsschaltung (S), K Entscheidungsschaltungen ($D_1$, ..., $D_k$, ..., $D_K$) umfassend,

wobei dieser Empfänger **dadurch gekennzeichnet ist, dass** wenigstens eine der Parallelinterferenzunterdrückungsstufen eine Stufe nach einem der Ansprüche 2 oder 3 ist.

5. Empfänger nach Anspruch 4, bei dem wenigstens eine Parallelinterferenzunterdrückungsstufe Testeinrichtungen ($T_1$, ..., $T_k$, ..., $T_K$) der Zuverlässigkeit der geschätzten Signale umfasst, und bei dem die Einrichtungen (M) zur Formulierung der Hypothesen bezüglich des diesen Signalen zuzuteilenden Vorzeichens so angepasst sind, dass sie nur die geschätzten Signale berücksichtigen, deren Zuverlässigkeit unter einem festgelegten Schwellenwert liegt, und die anderen geschätzten Signale, deren Zuverlässigkeit über diesem Schwellenwert liegt, direkt durch die Interferenzunterdrückungseinrichtungen (SPI) benutzt werden.

6. Empfänger nach Anspruch 4, bei dem die Eingangsstufe mit ihren Filtern und jede Anpassungsfilterstufe Gewichtungseinrichtungen ($P_{0k}$) der Ausgänge der Filter ($F_{0k}$) umfassen, wobei die Ausgangsstufe (S) Addierer ($AD_k$) umfasst, deren Eingänge mit den Gewichtungsschaltungen ($P_{0k}$) verbunden sind und der Ausgang mit den Entscheidungsschaltungen ($D_k$) verbunden ist.

7. Empfänger nach Anspruch 4, bei dem auf jede Filterstufe eine Gewichtungsschaltung ($P_{0k}$, $P_{1k}$, $P_{2k}$, ...) folgt, angeordnet zwischen dem Ausgang der Filterstufe und dem Eingang der Interferenzunterdrückungsstufe, wobei die Gewichtung von der Zuverlässigkeit der in der Stufe realisierten Schätzung abhängt.

**Claims**

1. Method of receiving CDMA signals with parallel interference suppression in which:

- a composite signal (r(t)) is received comprising a plurality of K signals corresponding to information symbols which have been spread in frequency by K different pseudo-random sequences,
- these K signals are correlated using said K sequences in an input stage constituted by k matched filters ($F_1$ ... $F_K$... $F_k$) for obtaining k first correlated signals,
- the corresponding K symbols are estimated,
- elimination takes place of the multi-user interferences of K signals in a plurality of parallel interference suppression stages in each of said stages,
- the K signals correlated in frequency are reconstructed by respreading said estimated symbols through the corresponding pseudo-random sequences,
- the contributions of the other (K-1) signals are subtracted from a respread signal to provide K new signals, spread in frequency but cleared, at least in part of the interference,
- after each parallel interference suppression stage, correlation takes place of the K new signals in a filtering stage intercalated between the parallel interference suppression stages,

this method being **characterized in that**:

- in each parallel interference suppression stage all the possible hypotheses on the signs of the Nxk symbols correlated in the following filtering stage are formulated, where N is a whole number equal to 1 or to a few units and representing a number of consecutive symbols on which processing takes place,

- for each hypothesis, one calculates the distance metric between the group of symbols correlated in the following filtering stage and the Nxk first correlated symbols delivered by the input stage,
- the hypothesis for which the metric is the smallest is retained, being the hypothesis which has a maximum likelihood,
- only the Nxk symbols corresponding to this maximum likelihood hypothesis are reconstructed.

2. Parallel interference suppression stage implementing the method according to claim 1, this stage comprising:

- K inputs receiving k signals correlated in frequency,
- K means of estimating ($ES_1$, ..., $ES_k$, ..., $ES_K$) symbols corresponding to these K signals,
- K means of reconstructing ($R_1$, ..., $R_k$, ..., $R_K$) signals respread in frequency using the corresponding pseudo-random sequences,
- means of parallel interference suppression (SPI) comprising K channels in parallel capable of subtracting from one respread signal, the contributions of the other (K-1) respread signals,
- K outputs supplying K signals spread in frequency, cleared, at least in part of the interference,

this stage being **characterized in that** it comprises:

- means (M) placed between the estimation means ($ES_1$, ..., $ES_k$, ..., $ES_K$) and the reconstruction means ($R_1$, ..., $R_k$, ..., $R_K$) and capable of formulating all the possible hypotheses on the signs of the Nxk symbols correlated in the following filtering stage, and of calculating, for each hypothesis, the distance metric ($M_j$) between the group of Nxk symbols correlated in the following filtering stage and the Nxk symbols correlated in the following filtering stage and the Nxk symbols correlated in the input stage and of retaining the hypothesis (j) for which the metric ($M_j$) is the smallest, the hypothesis which offers a maximum likelihood.

3. Stage according to claim 2, in which the means of calculating the metric comprise:

- means of formulating hypotheses on the sign to be assigned to the amplitude of the signals supplied by the means of estimation,
- means of calculating all the differences $Z_0(k) - Z_1(K)_j$, where $Z_0(k)$ represents the signal at the output from the $k^{th}$ matched filter of the input stage and $Z_1(K)_j$ the signal at the $k^{th}$ filtering i, the signal being allocated the sign corresponding to each hypothesis j,
- means of calculating the square of these differences, or $(Z_0(k) - Z_i(K)_j)^2$, means of calculating the sum of these squares for the k rows of signals, which leads, for each hypothesis (j), to the metric ($M_j$).

4. Receiver of CDMA signals that implements the method of claim 1 and comprises:

- a general input (E) suitable for receiving a composite signal (r(t)) formed from a plurality of K signals corresponding to information symbols which have been spread in frequency by K different pseudo-random sequences,
- an input stage with K channels in parallel each comprising filters ($F_{01}$, ..., $F_{0k}$, ..., $F_{0K}$) to correlate in frequency the composite signal (r(t)) through one of the K pseudo-random sequences, this stage supplying K signals correlated in frequency,
- at least one parallel interference suppression stage ($V_1$, $V_2$, ...),
- filtering stages positioned between the parallel interference suppression stages and comprising K filters ($F_{1k}$, $F_{2k}$, ...) matched to the pseudo-random sequences,
- an output circuit (S) comprising K decision circuits ($D_1$, ..., $D_k$, ..., $D_K$),

this receiver being **characterized in that** at least one of the parallel interference suppression stages is a stage according to claims 2 or 3.

5. Receiver according to claim 4, in which at least one parallel interference suppression stage comprises reliability testing means ($T_1$, ..., $T_k$, ..., $T_K$ for the estimated signals and in which the means (M) for formulating the hypotheses on the sign to be allocated to these signals are adapted so as not to take into account the estimated signals having a reliability below a fixed threshold, the other estimated signals whose reliability is above the threshold being directly used for the interference suppression means (SPI).

6. Receiver according to claim 4, in which the input stage with its filters and each matched filtering stage comprise means of weighting ($P_{0k}$) the outputs from the filters ($F_{0k}$), the output stage (S) comprising adders ($AD_k$) the inputs

to which are connected to the weighting circuits ($P_{0k}$) and the output from which is connected to the decision circuits ($D_k$).

7. Receiver according to claim 4, in which each filtering stage is followed by a weighting circuit ($P_{0k}$, $P_{1k}$, $P_2$, ...) arranged between the output from the filtering stage and the input to the interference suppression stage, the weighting depending on the reliability of the estimation made in the stage.

FIG. 1

FIG. 2

F1, FR, FK

SPI

R1, RR, RK

M

ES1, ESR, ESk

V

F1, FR, FK

FIG. 3

FIG. 4

FIG. 8

FIG. 5

FIG. 6

FIG. 7

FIG. 9

FIG. 10